# EUROPÄISCHE PATENTANMELDUNG

(11) **EP 0 735 714 A2**
(43) Veröffentlichungstag der Anmeldung: **02.10.1996**
(21) Anmeldenummer: 96103343.8
(22) Anmeldetag: 04.03.1996
(51) Int. Cl.: H04L 7/033, H04L 7/04

(54) **Taktphasenrückgewinnung in digitalen Übertragungssystemen mit Zeitvielfachzugriff und Burstbetrieb**

(30) Priorität: 28.03.1995 DE 19511404
(71) Anmelder: SIEMENS AKTIENGESELLSCHAFT, 80333 München (DE)
(72) Erfinder: Bolze, Thomas, Dr., 80804 München (DE); Sommer, Jörg, Dipl.-Ing., 81379 München (DE)

(57) **Zusammenfassung**

In Vielfachzugriffssystemen werden die von Teilnehmern an eine Zentrale gesendeten Bursts aufgrund der unterschiedlichen Laufzeit mit unterschiedlicher Phasenlage empfangen. Zur Erkennung der Phasenlage steht nur eine Präambel mit einer Dauer von 10 bis 40 Bitperioden zur Verfügung. Erfindungsgemäß wird das empfangene Signal im unverzögerten und im um eine halbe Bitperiode verzögerten Zustand an die Signaleingänge eines gesteuerten Umschalters abgegeben, der durch einen Komparator gesteuert wird. Das Steuersignal des Komparators wird durch Vergleich des frequenzverdoppelten Empfangssignals mit einem Zentraltakt erzeugt.

## Beschreibung

Die Erfindung betrifft ein Verfahren zur Rückgewinnung der Taktphase entsprechend dem Oberbegriff des Anspruchs 1 und Anordnungen zur Durchfuhrung dieses Verfahrens.

Bei Punkt-zu-Multipunkt-Übertragungsverfahren, wie beispielsweise in passiven optischen Netzen, Koaxialkabelstrecken oder Funkstrecken mit Rückkanal kommunizieren mehrere Teilnehmer mit einer Zentrale. Anstelle eines zeitkontinuierlichen Datenstroms werden dabei von den Teilnehmern allgemein als Bursts bezeichnete Blöcke von Nutzdaten im sogenannten Zeit-Vielfachzugriff - TDMA - gesendet. Diese Datenblöcke sind nicht exakt zueinander synchronisiert und treffen deshalb im Empfänger mit unterschiedlicher Phasenlage ein. Der Empfänger muß daher zu Beginn eines jeden Bursts den Takt möglichst rasch zurückgewinnen, wobei die Bitfolgefrequenz genau bekannt, die Phasenlage der einzelnen Burst aber völlig unbekannt ist. Für eine schnelle Taktrückgewinnung werden die Datenblöcke bisher nach einem Code gebildet, der, wie beispielsweise der CMI-Code, reichlich Taktinformationen enthält. Zur Erleichterung der Synchronisierung wird in der Regel eine Präambel gesendet, die typischerweise 10 bis 40 Bit umfaßt und hauptsächlich der empfangsseitigen Taktrückgewinnung sowie zur Pegeleinmessung dient. Das Problem bei der empfangsseitigen Taktrückgewinnung besteht darin, daß die Taktphase innerhalb der vergleichsweise kurzen Präambel zurückgewonnen werden muß und deshalb herkömmliche Verfahren mit Phasenregelschleifen hoher Güte wegen deren hoher Einschwingzeit nicht verwendet werden können. Auch kann im Hinblick auf eine sichere Taktrückgewinnung die Dauer der Präambel nicht beliebig verlängert werden, da durch eine relativ lange Präambel die Übertragungskapazität für Nutzdaten verringert wird. Weitere Probleme ergeben sich dadurch, daß zwar bei Verwendung des CMI-Code reichlich Taktinformation zur Verfügung steht, sich aber auch Schrittgeschwindigkeit und Signalbandbreite verdoppeln und damit die Empfängerempfindlichkeit und bei begrenzter zur Verfügung stehender Bandbreite die Zahl der Nutzsignale verringert und sich die benötigte Signalverarbeitungsgeschwindigkeit verdoppelt.

Die Aufgabe der Erfindung besteht also darin, ein Verfahren der eingangs erwähnten Art so weiterzubilden, daß es auch bei vergleichsweise kurzen Präambeln und bei einer vom CMI-Code abweichenden Codierung, also beispielsweise bei NRZ-Codes, eine Rückgewinnung der Taktphase ermöglicht.

Erfindungsgemäß wird die Aufgabe durch ein Verfahren der eingangs genannten Art gelöst, das durch die Merkmale des Kennzeichens des Anspruchs 1 weitergebildet ist. Der Vorteil des erfindungsgemäßen Verfahrens liegt darin, daß mit geringem Aufwand eine Möglichkeit geschaffen wurde, Übertragungssignale mit vergleichsweise geringerer Bandbreite in Bursts zu übertragen und zur Realisierung handelsübliche Bauteile verwendet werden können. In den Patentansprüchen 3 und 4 sind vorteilhafte Anordnungen zur Durchführung des erfindungsgemäßen Verfahrens beschrieben, die bei vergleichsweise geringem Aufwand eine ausreichende Genauigkeit bei der Bestimmung der Taktphase der empfangenen Burst ermöglichen.

Die Erfindung soll im folgenden anhand in der Zeichnung dargestellter Ausführungsbeispiele für die Anordnungen zur Durchführung des Verfahrens näher erläutert werden. Dabei zeigt:
- Figur 1: eine erste Anordnung zur Taktrückgewinnung und
- Figur 2: eine zweite Anordnung zur Taktrückgewinnung, die gegenüber der Anordnung nach Figur 1 nur den halben Phasenfehler aufweist.

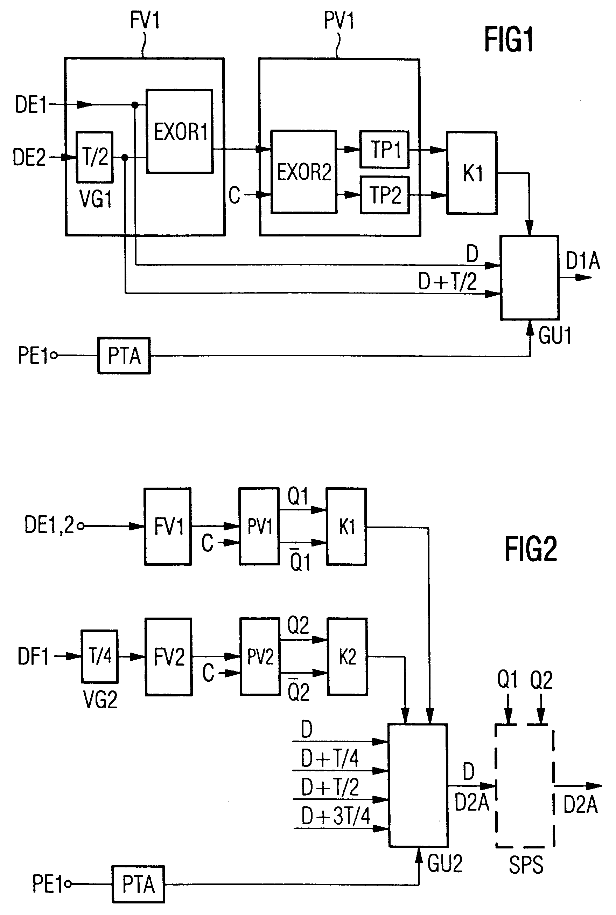

Die in der Figur 1 dargestellte Anordnung zur Taktphasenrückgewinnung enthält eingangsseitig eine Pilotsignalauswertung PTA und dazu parallel eine erste Anordnung FV1 zur Frequenzverdopplung, der ein erster Phasenvergleicher PV1 nachgeschaltet ist. Mit den Ausgängen des ersten Phasenvergleichers PV1 ist ein erster Komparator K1 verbunden, dessen Ausgangssignal an einen zweiten Steuereingang eines ersten gesteuerten Umschalters GU1 abgegeben wird, an dessen ersten Steuereingang das Ausgangssignal der Pilotsignalauswertung PTA ansteht.

Die Signaleingänge DE1, 2; PE1 der in Figur 1 dargestellten Anordnung sind an eine Quelle für Burstsignale angeschlossen, dabei kann es sich um den Ausgang des Fotostromverstärkers einer Übertragungsstrecke für optische Signale handeln, es kann sich auch um den Ausgang eines Funkempfängers oder einer Koaxialkabelstrecke handeln. Voraussetzung für die Funktion der Anordnung nach Figur 1 ist der Empfang eines Burstsignals, der durch ein Pilotsignal gefolgt von einer die Taktphaseninformation enthaltenden Präambel mit einer Länge von 10 bis 40 Bitperioden eingeleitet wird. Voraussetzung ist weiterhin, daß ein dem Taktsignal der empfangenen Präambel frequenzgleiches Taktsignal im Empfänger zur Verfügung steht, dessen Phase als Referenzphase dient und das entweder aus dem Burstsignal oder aus einem Zentraltakt gewonnen wird.

Mit dem Eingang der Anordnung zur Taktphasenrückgewinnung sind der Signaleingang PE1 der Pilotsignalauswertung PTA und ein erster und ein zweiter paralleler Signaleingang DE1, DE2 der ersten Anordnung FV1 zur Frequenzverdopplung verbunden. Der erste Eingang DE1 ist dabei mit einem Eingang eines ersten Exklusiv-ODER-Gatters EXOR1 direkt verbunden, der zweite Signaleingang DE2 ist über ein erstes Verzögerungsglied VG1 mit einer Verzögerungszeit von einer halben Bitperiode der empfangenen Signale mit einem weiteren Eingang des ersten Exklusiv-ODER-Gatters EXOR1 verbunden. Der Ausgang des ersten Exklusiv-ODER-Gatters EXOR1 ist mit dem ersten Eingang eines im ersten Phasenvergleicher PV1 enthaltenen zweiten Exklusiv-ODER-Gatters EXOR2 verbunden, dessen zweiter Eingang als Referenzeingang an eine Quelle für den Zentraltakt C angeschlossen ist. Der nichtinvertierende und der invertierende Ausgang des zweiten Exklusiv-ODER-Gatters EXOR2 sind jeweils getrennt über ein erstes bzw. zweites Tiefpaßfilter TP1, TP2 mit den Ausgängen des ersten Phasenvergleichers PV1 verbunden. An diese Ausgänge sind zuordnete Eingänge eines ersten Komparators K1 angeschlossen, dessen Ausgang mit einem weiteren Steuereingang des ersten gesteuerten Umschalters GU1 verbunden ist und dessen Signaleingänge jeweils getrennt den Eingängen des ersten Exklusiv-ODER-Gatters EXOR1 parallel geschaltet sind. Der Ausgang des ersten gesteuerten Umschalters GU1 stellt den Signalausgang D1A der Anordnung zur Taktphasenrückgewinnung dar, an dem die im empfangenen Burst enthaltenen Datensignale mit der an den Zentraltakt angenäherten Taktphase anstehen.

Die Taktphasenrückgewinnung erfolgt in der Schaltungsordnung nach Figur 1 so, daß zunächst die Pilotsignalauswertung PTA bei Erkennen eines Pilotsignals ein Ausgangssignal erzeugt, durch das der erste gesteuerte Umschalter GU1 nach Empfang der Präambel in der gewählten Stellung fixiert wird. Die unverzögerte Präambel als Folge von Null- und Einsbits wird mit der um eine halbe Bitperiode verzögerten Präambel modulo-2-addiert und damit frequenzverdoppelt, so daß sich ein erstes Taktsignal ergibt, das dem einen Eingang des ersten Phasenvergleichers PV1 und damit dem zweiten Exklusiv-ODER-Gatter EXOR2 zugeführt wird. wo durch erneute modulo-2-Addition aus dem erzeugten Taktsignal und dem Zentraltakt ein Differenzsignal gebildet wird. Ist dabei die Phasendifferenz zwischen erzeugtem Taktsignal und Zentraltakt betragsmäßig kleiner als 90°, so ist die mittlere Spannung am nichtinvertierenden Ausgang Q des zweiten Exklusiv-ODER-Gatters EXOR2 und damit auch am Ausgang des ersten Tiefpasses TP1 kleiner als die mittlere Spannung am invertierenden Ausgang des zweiten Exklusiv-ODER-Gatters EXOR2 bzw. am Ausgang des zweiten Tiefpasses TP2. Entsprechend ist bei einer Phasendifferenz größer als 90° die Spannung am Ausgang des ersten Tiefpasses TP1 größer als am Ausgang des zweiten Tiefpasses TP2. Der erste Komparator K1 ist nun so eingestellt, daß er entsprechend der Spannung an seinen Eingängen ein Umschaltsignal an den ersten gesteuerten Umschalter GU1 abgibt. An den beiden Signaleingängen des ersten gesteuerten Umschalters GU1 steht zunächst die unverzögerte und die verzögerte Präambel und anschließend das unverzögerte und das verzögerte Datensignal an. Durch den Komparator wird der erste gesteuerte Umschalter nun so geschaltet, daß bei einer Phasendifferenz zwischen erzeugtem Taktsignal und Zentraltakt kleiner als 90° das nichtverzögerte Empfangssignal vom ersten gesteuerten Umschalter und bei einer Phasendifferenz größer als 90° das um eine halbe Bitperiode verzögerte Signal durchgeschaltet wird. Der erste gesteuerte Umschalter GU1 schaltet dabei nur während des Empfangs der Präambel. Durch einen in der Pilotsignalauswertung PTA enthaltenen Zähler gesteuert, bleibt der erste gesteuerte Umschalter GU1 beim Empfang der Nutzdaten in der Stellung, die während des Empfangs der Präambel ausgewählt wurde, wobei vorausgesetzt wird, daß zwischen Präambel und Nutzsignal kein Phasensprung auftritt. Die Phasendifferenz zwischen dem am Ausgang D1A anstehenden Datensignal und dem Zentraltakt reduziert sich dabei auf maximal ± 90°, so daß in günstigen Fällen bereits eine eindeutige Entscheidung zwischen einem Nullbit und einem Einsbit möglich ist.

Durch eine Verdopplung der Schaltung nach Figur 1 läßt sich entsprechend Figur 2 die Phasendifferenz zwischen resultierendem Datensignal und Zentraltakt auf ± 45° einschränken. Die Anordnung nach der Figur 2 enthält gegenüber der Anordnung nach Figur 1 zusätzlich eine zweite Anordnung FV2 zur Frequenzverdopplung, einen zweiten Phasenvergleicher PV2, einen zweiten Komparator K2 und einen, den ersten gesteuerten Umschalter GU1 ersetzenden zweiten gesteuerten Umschalter GU2. Die zweite Anordnung FV2 zur Frequenzverdopplung ist dabei über ein zweites Verzögerungsglied VG2 mit einer Verzögerungszeit von einem Viertel einer Bittaktperiode mit dem Signaleingang F1 verbunden. Der zweite gesteuerte Umschalter GU2 weist nunmehr vier Signaleingänge auf, die mit dem Eingängen des ersten Exklusiv-ODER-Gatters EXOR1 der beiden Anordnungen zur Frequenzverdopplung FV1, FV2 jeweils getrennt verbunden sind und an denen die empfangenen Datensignale in unverzögertem Zustand, in einem um eine viertel, um eine halbe und um dreiviertel Bitperioden verzögerte Zustand anstehen. Die Steuerung des zweiten gesteuerten Umschalters GU2 erfolgt dabei von beiden Komparatoren K1, K2 durch Vergleich der Steuersignale und von der Pilotsignalauswertung PTA.

Zusätzlich kann den Ausgängen D1A,D2A des gesteuerten Umschalters GU2 ein steuerbarer Phasenschieber SPS nachgeschaltet werden, dessen Steuereingänge jeweils mit den ersten Ausgängen des ersten und zweiten Phasenvergleichers PV1, PV2 verbunden sind. Am Ausgang D2A' des steuerbaren Phasenschiebers SPS kann dann ein hinsichtlich seines Phasenfehlers weiter reduziertes Nutzsignal entnommen werden.

Anstelle des steuerbaren Phasenschiebers kann dem zweiten gesteuerten Umschalter GU2 auch eine handelsübliche Phasenregelschleife hoher Güte oder ein handelsüblicher Phasenregelbaustein mit integriertem Datenphasenschieber nachgeschaltet sein.

## Patentansprüche

1. Verfahren zur Taktphasenrückgewinnung aus empfangenen Burstsignalen, die von einer Vielzahl externer Stationen zu einer Zentralstation im Zeitvielfachzugriff übertragen werden und die am Anfang ein Pilotsignal, gefolgt von einer Präambel und dem eigentlichen Datensignal enthalten,
**dadurch gekennzeichnet,**
daß das Pilotsignal des empfangenen Burstsignals ausgewertet und ein erstes Steuersignal zur Aktivierung eines ersten gesteuerten Umschalters (GU1) erzeugt wird,
daß aus dem empfangenen Burstsignal ein um eine halbe Bittaktperiode verzögertes Burstsignal erzeugt wird,
daß aus dem empfangenen Burstsignal ein erstes Taktsignal mit einer gegenüber letzterem verdoppelten Taktfrequenz erzeugt wird,
daß ein Phasenvergleich zwischen dem ersten Taktsignal und
einem Zentraltakt der Zentralstation als Referenzsignal vorgenommen wird und den Taktabweichungen entsprechende Differenzspannungen erzeugt werden,
daß aus den Differenzspannungen ein zweites, Umschaltbefehle enthaltendes Steuersignal für den ersten gesteuerten Umschalter (GU1) erzeugt wird,
daß den Signaleingängen des ersten gesteuerten Umschalters (GU1) das unverzögerte und das verzögerte Burstsignal jeweils getrennt zugeführt werden,
daß eine Umschaltung zwischen den Signaleingängen des ersten gesteuerten Umschalters (GU1) nur während des Empfangs der Präambel erfolgt und
daß am Signalausgang des ersten gesteuerten Umschalters (GU1) ein phasenmäßig dem Zentraltakt angenähertes Datensignal abgegeben wird.

2. Verfahren nach Patentanspruch 1,
**dadurch gekennzeichnet,**
daß die Ausgangssignale des Phasenvergleichs einer Tiefpaßfilterung unterworfen werden.

3. Anordnung zur Durchführung eines Verfahrens nach Patentansprüchen 1 oder 2,
**dadurch gekennzeichnet,**
daß eine Pilotsignalauswertung (PTA) vorgesehen ist, deren Signaleingang(PE1) mit dem Empfängereingang verbunden ist und deren Ausgang mit einem ersten Steuereingang eines ersten gesteuerten Umschalters(GU1) verbunden ist,
daß eine Anordnung (FV1) zur Frequenzverdoppelung vorgesehen ist, deren Signaleingänge(DE1, DE2) mit dem Empfängereingang verbunden sind und deren erster Signaleingang (DE1) mit dem ersten Eingang eines ersten Exklusiv-ODER-Gatters (EXOR1) verbunden ist,
daß der zweite Signaleingang (DE2) der Anordnung (FV1) zur Frequenzverdoppelung über ein erstes Verzögerungsglied (VG1) mit einer Verzögerung von einer halben Taktperiode (T/2) der empfangenen Burstsignale mit einem zweiten Eingang des ersten Exklusiv-ODER-Gatters (EXOR1) verbunden ist, dessen Ausgang der Ausgang der Anordnung (FV1) zur Frequenzverdoppelung ist und der mit dem ersten Eingang eines ersten Phasenvergleichers (PV1) verbunden ist,
daß an eine Quelle für einen Zentraltakt (C) ein Referenzeingang des ersten Phasenvergleichers (PV1) angeschlossen ist und die beiden Ausgänge des ersten Phasenvergleichers (PV1) mit zugeordneten Eingängen eines zweiten Exklusiv-ODER-Gatters (EXOR2) verbunden sind, dessen nichtinvertierender und dessen invertierender Ausgang (Q, Q-) jeweils getrennt über ein erstes bzw. zweites Tiefpaßfilter (TP1, TP2) mit den Ausgängen des ersten Phasenvergleichers (PV1) und darüber mit zugeordneten Eingängen eines ersten Komparators (K1) verbunden sind,
daß der Ausgang des ersten Komparators (K1) mit einem weiteren Steuereingang des ersten gesteuerten Umschalters (GU1) verbunden ist, dessen Signaleingänge jeweils getrennt den Eingängen des ersten Exklusiv-ODER-Gatters (EXOR1) parallelgeschaltet sind,
daß der erste gesteuerte Umschalter (GU1) durch das Ausgangssignal der Pilotsignalauswertung (PTA) aktivierbar ist und nur während der Empfangszeit der Präambel zwischen seinen beiden Signaleingängen umschaltbar ist und daß am Signalausgang (D1A) des ersten gesteuerten Umschalters (GU1) das phasenmäßig an den Zentraltakt angeglichene empfangene Burstsignal entnehmbar ist.

4. Anordnung nach Patentanspruch 3,
**dadurch gekennzeichnet,**
daß ein zweiter Frequenzverdoppler (FV2) vorgesehen ist, dessen Signaleingang über ein zweites Verzögerungsglied (VG2) mit einer Verzögerung entsprechend einem Viertel der Taktperiode der empfangenen Burstsignale an den Empfängereingang angeschlossen ist,
daß dem zweiten Frequenzverdoppler (FV2) ein zweiter Phasenvergleicher (PV2) nachgeschaltet ist und diesem ein zweiter Komparator (K2), wobei die Anschlüsse und Verbindungen denen der Anordnung nach Patentanspruch 3 entsprechen,
daß der Ausgang des ersten Komparators (K2) mit dem zweiten Eingang eines zweiten gesteuerten Umschalters (GU2) verbunden ist, daß der Ausgang des zweiten Komparators (K2) mit dem dritten Steuereingang des zweiten gesteuerten Umschalters (GU2) und die Pilotsignalauswertung (PTA) mit dem ersten Steuereingang des zweiten gesteuerten Umschalters (GU2) verbunden ist,
daß die ersten beiden Signaleingänge des zweiten gesteuerten Umschalters (GU2) weiterhin den beiden Signaleingängen des ersten Exklusiv-ODER-Gatters (EXOR1) parallelgeschaltet sind,
daß der zweite Frequenzverdoppler (FV2) ein drittes Exklusiv-ODER-Gatter enthält, dessen Eingänge einem dritten und vierten Signaleingang des zweiten gesteuerten Umschalters (GU2) parallelgeschaltet sind,
und daß am Signalausgang (D2A) des zweiten gesteuerten Umschalters (GU2) das phasenmäßig an den Zentraltakt (C) angeglichene empfangene Burstsignal entnehmbar ist.

5. Anordnung nach Patentanspruch 3 oder 4,
**dadurch gekennzeichnet,**
daß dem Ausgang des gesteuerten Umschalters (GU1, GU2) ein steuerbarer Phasenschieber (SPS) nachgeschaltet ist, dessen beide Steuereingänge jeweils mit den nichtinvertierenden Ausgängen (Q1, Q2) des ersten und gegebenenfalls des zweiten Phasenvergleichers (PV1, PV2)verbunden sind und an dessen Ausgang (D2A') das phasenmäßig an den Zentraltakt angeglichene empfangene Burstsignal entnehmbar ist.
